# EUROPÄISCHE PATENTSCHRIFT

(11) **EP 1 126 206 B1**
(45) Veröffentlichungstag und Bekanntmachung des Hinweises auf die Patenterteilung: **08.05.2002**
(21) Anmeldenummer: 00103245.7
(22) Anmeldetag: 17.02.2000
(51) Int. Cl.: F16L 33/207, F16L 37/10

(54) **Pressverbindung für Rohre**
Crimped fitting for pipes
Raccord de compression pour tuyaux

(43) Veröffentlichungstag der Anmeldung: 22.08.2001
(73) Patentinhaber: Roth Werke GmbH, 35232 Dautphetal (DE)
(72) Erfinder: Weigel, Jürgen, Dipl.-Ing., 35239 Steffenberg-Oberhörlen (DE); Hoellenriegel, Wolfgang, Dipl.-Ing., 35216 Biedenkopf (DE)
(74) Vertreter: Albrecht, Rainer Harald, Dr.-Ing.

(56) Entgegenhaltungen:
- EP-A- 0 509 899
- EP-A- 0 728 979
- DE-A- 19 741 641
- US-A- 3 549 180
- US-A- 4 305 608

## Beschreibung

Die Erfindung betrifft eine Pressverbindung für Rohre bestehend aus einem Verbindungsstück, das mindestens einen mit ringförmigen Nuten versehenen Anschlusszapfen für ein Rohr aufweist, und einer konzentrisch zum Anschlusszapfen angeordneten, metallischen Presshülse. Bei Rohren handelt es sich insbesondere um Kunststoffrohre, mehrschichtig aufgebaute Kunststoff-Verbundrohre und Kunststoff-Verbundrohre mit einer Metalleinlage. Mit Hilfe eines Presswerkzeuges, das am Umfang der Presshülse angesetzt wird, werden das Verbundrohr und die Presshülse so verformt, dass das Kunststoffmaterial des angeschlossenen Rohres die ringförmigen Nuten des Verbindungsstückes, auch Fitting genannt, ausfüllen. Es entsteht eine kraft- und formschlüssige, drehfeste und dichte Verbindung.

Eine Pressverbindung des beschriebenen Aufbaus ist aus EP-B 0 611 911 bekannt. Bei der bekannten Ausführung bilden die Presshülse und ein daran befestigter Kunststoffring ein separat handhabbares Bauteil, welches bei der Montage auf das Rohrende des zu montierenden Rohres aufgesteckt wird. Das Rohr mit endseitig angeordneter Presshülse wird dann auf den Zapfen des Verbindungsstückes bis zu einer Anschlagfläche des Verbindungsstückes aufgeschoben. Die bekannte Ausführung hat handhabungstechnische Nachteile. So besteht die Gefahr, dass die Presshülse als loses Bauteil verloren geht, im Zuge der Montage nicht richtig positioniert wird oder beim Anlegen des Presswerkzeuges verrutscht. Der endseitig an die Presshülse angeschlossene Kunststoffring ist ferner nur dann erforderlich, wenn metallische Verbindungsstücke eingesetzt werden. Bei Verwendung von Kunststoff-Fittings kommen metallische Presshülsen ohne endseitigen Kunststoffring zum Einsatz. Da die Presshülsen für Kunststoff-Fittings und Metall-Fittings identische oder zumindest ähnliche Abmessungen besitzen, kann es zu Verwechslungen kommen mit der Gefahr, dass Presshülsen ohne Kunststoffring an metallischen Verbindungsstücken eingesetzt werden. Derartige Montagefehler haben zur Folge, dass an den Stirnflächen der angeschlossenen Verbundrohre in Folge eines metallischen Kontaktes zwischen der Metalleinlage und dem Verbindungsstück Korrosionen auftreten.

Bei einer aus US 3,549,180 bekannten Pressverbindung ist an die metallische Presshülse ein Kragen angeformt, der formschlüssig mit dem metallischen Verbindungsstück verbunden ist. Der Kragen der Presshülse sowie die Verbindung werden durch Umformverfahren, z. B. durch Pressen im Gesenk oder durch Fließpressen, hergestellt. In den ringförmigen Raum wird ein unter Wärme härtender Kunststoff eingebracht. Die Fertigung der für die Pressverbindung erforderlichen Teile ist aufwendig.

Der Erfindung liegt die Aufgabe zugrunde, eine Pressverbindung für Rohre anzugeben, die einfach in der Handhabung ist, keine losen Bauteile umfasst und konstruktiv einfach aufgebaut ist.

Ausgehend von einer Pressverbindung mit den eingangs beschriebenen Merkmalen wird die Aufgabe erfindungsgemäß dadurch gelöst, dass die Presshülse an ihrem anschlussseitigen Ende mindestens zwei radial nach innen vorspringende Nasen aufweist, die axial in Aussparungen eines an das Verbindungsstück angeformten ringförmigen Bundes oder eines fest an das Verbindungsstück angeschlossenen Kunststoffringes einsetzbar sind und nach einer Drehung der Presshülse in eine ringförmige Nut eingreifen, wobei die vormontierte Presshülse den Anschlusszapfen konzentrisch umgibt und einen Ringraum für den Einschub eines Rohres bildet. Vorzugsweise sind an dem anschlussseitigen Ende der Presshülse drei oder mehr Nasen vorgsehen.

Erfindungsgemäß ist die Presshülse durch eine formschlüssige Verbindung, die nach Art einer Bajonettverbindung ausgebildet ist, fest mit dem Verbindungsstück bzw. Fitting verbunden. Die Anordnung wird werkseitig vormontiert, so dass das mit dem Fitting zu verbindende Rohr lediglich noch in den dafür vorgesehen ringförmigen Aufnahmeraum bis zum Anschlag eingeschoben werden muss. Beim Anlegen des Presswerkzeuges kann die Hülse nicht verrutschen. Ferner gewährleistet der fest an das Verbindungsstück angeschlossene Kunststoffring bzw. der ringförmige Bund des Verbindungsstückes eine Führung des Presswerkzeuges. Dazu ist der Kunststoffring bzw. der ringförmige Bund, Durchmesser und Wandstärke so gestaltet, dass er in eine speziell darauf abgestimmte, dem jeweiligen Rohrdurchmesser angepasste Ausnehmung an den Pressbacken des Presswerkzeuges eingreifen. Durch die Führung des Presswerkzeuges ist sichergestellt, dass bei der Verpressung eine bestimmungsgemäße Übereinstimmung zwischen der Kontur des Anschlusszapfens und der Gegenflächen in den Pressbacken des Presswerkzeuges hergestellt ist. Dadurch gelingt es, die Pressverbindung funktionsgerecht dicht und reproduzierbar herzustellen. So sind Montagefehler weitgehend ausgeschlossen. Die erfindungsgemäß eingerichtete Bajonettverbindung ermöglicht es, den Kunststoffring bzw. die Anschlussteile des Verbindungsstückes aus einem formstabilen, schlagzähen, technischen Kunststoff, z. B. Polyamid, zu fertigen. Durch die erfindungsgemäß eingerichtete Verbindung ist die vorkragendende Presshülse sicher fixiert, wobei eine konzentrische Ausrichtung sichergestellt ist. Die Bajonettverbindung sollte möglichst spielfrei ausgestaltet sein. Gemäß einer bevorzugten Ausführungsform der Erfindung weist die ringförmige Nut des Kunststoffrings bzw. die hinter dem ringförmigen Bund des Verbindungsstückes in Drehrichtung der Presshülse konisch zulaufende Spannflächen auf, welche die Nasen der Presshülse mit einem Klemmsitz fixieren. Ferner kann der Klemmsitz auch dadurch erreicht werden, dass in der Ringnut Erhebungen mit unterschiedlich ausgebildeten Radien angeordnet sind, über die die Nasen der Presshülse einrasten. Die Ringnut kann ferner durch Stege in Segmente unterteilt sein, welche Anschläge für die in die Ringnut eingreifende Nasen bilden. Zweckmäßig enthalten die Spannflächen Aufnahmetaschen, in welche die Nasen einrasten. Die Verrastung trägt dazu bei, dass sich die Presshülse im Zuge der Montage auch bei einer rauhen Handhabung nicht ungewollt von dem Fitting lösen kann. Sollte die Presshülse andererseits vor der Montage beschädigt worden sein, besteht die Möglichkeit, die Bajonettverbindung zu lösen und die beschädigte Presshülse durch eine neue Presshülse zu ersetzen.

Die erfindungsgemäße Lehre eignet sich sowohl für Fittings aus Kunststoff als auch für metallische Fittings. Gemäß einer ersten Ausführungsform der Erfindung ist das Verbindungsstück als Kunststoffspritzgussteil ausgebildet und weist zumindest einen einstückig angeformten ringförmigen Bund der beschriebenen Gestaltung und Zweckbestimmung auf. Wenn das Verbindungsstück als Metallteil ausgebildet ist, so wird der Kunststoffring fest an einen Kragen des Verbindungsstückes angeschlossen. Die Verbindung kann z.B. als Schnappverbindung oder ebenfalls als Bajonettverbindung ausgebildet sein. Gemäß einer bevorzugten Ausführung der Erfindung weist der Kunststoffring eine Muffe auf, die eine ringförmige Innennut und mehrere am Umfang in äquidistanten Abständen angeordnete Einschubschlitze enthält. Die Muffe ist axial auf den Kragen des metallischen Verbindungsstückes aufsetzbar. Durch eine Drehbewegung ist die Innennut dann mit radialen Vorsprüngen des Kragens in Eingriff bringbar. Der Kunststoffring sowie die Presshülse sind werkseitig vormontiert.

Die Presshülse ist zweckmäßig als nahtloses Tiefziehtei] ausgebildet. Beim Tiefziehen entsteht ein Boden, der ausgestanzt wird, wobei eine Hülse mit einem schmalen, nach innen eingestülpten Rand entsteht. Bei dem beschriebenen Fertigungsverfahren lassen sich die Nasen, die für die erfindungsgemäße Formschlussverbindung zwischen Presshülse und Kunststoffring erforderlich sind, auf einfache und kostengünstige Weise dadurch herstellen, dass ein Stanzwerkzeug verwendet wird, welches an dem nach innen eingestülpten Rand Vorsprünge stehen lässt. Gemäß einer bevorzugten Ausführung der Erfindung weist die Presshülse daher als Tiefziehteil einen nach innen eingestülpten und mit radialen Vorsprüngen versehenen Rand auf, wobei die Vorsprünge Nasen für die Formschlussverbindung mit dem Kunststoffring bilden.

Im folgenden wird die Erfindung anhand einer lediglich ein Ausführungsbeispiel darstellenden Zeichnung erläutert. Es zeigen schematisch:
- Fig. 1: in einer perspektivischen Darstellung den Aufbau einer Pressverbindung für Rohre vor dem Pressvorgang,
- Fig. 2: einen Längsschnitt durch den in Fig. 1 dargestellten Gegenstand,
- Fig. 3: den Längsschnitt durch einen Kunststoffring der in Fig. 1 dargestellten Pressverbindung,
- Fig. 4: eine Draufsicht auf den Gegenstand der Fig. 3 aus der Blickrichtung A in Fig. 3,
- Fig. 5: den Längsschnitt durch eine Presshülse der in Fig. 1 dargestellten Pressverbindung,
- Fig. 6: eine Draufsicht auf den in Fig. 5 dargestellten Gegenstand aus der Blickrichtung B in Fig. 5,
- Fig. 7: ein Verbindungsstück aus Kunststoff für eine weitere Ausführung der erfindungsgemäßen Pressverbindung,
- Fig. 8: eine weitere Ausgestaltung des in Fig. 7 dargestellten Gegenstandes,
- Fig. 9: einen Ausschnitt aus Fig. 8 in vergrößerter Darstellung.

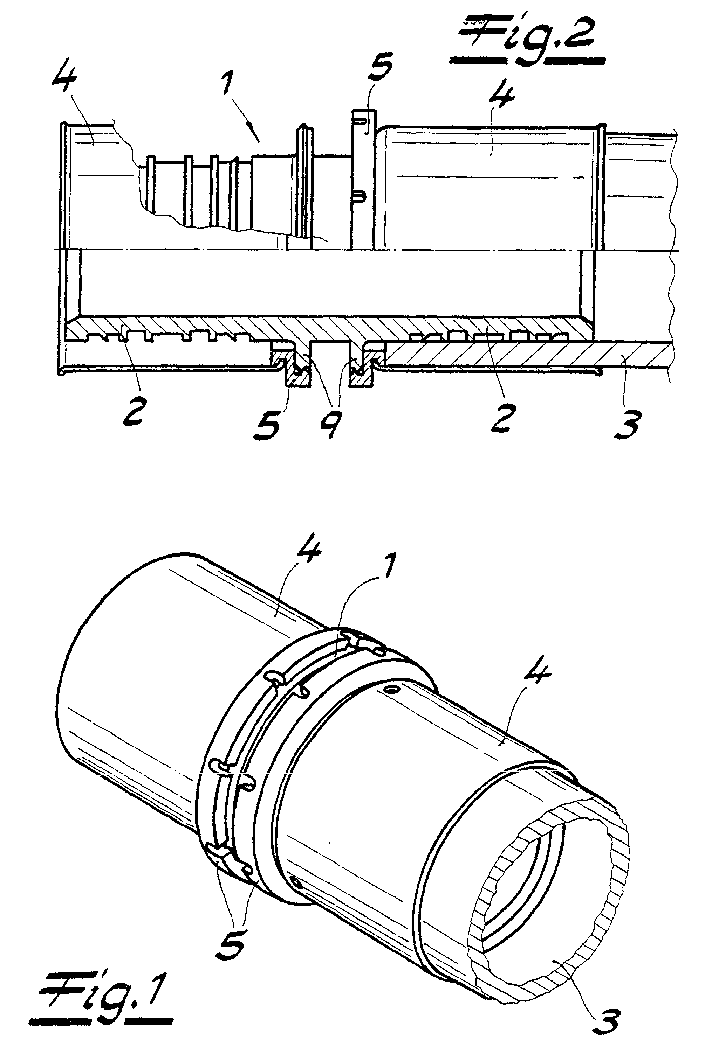

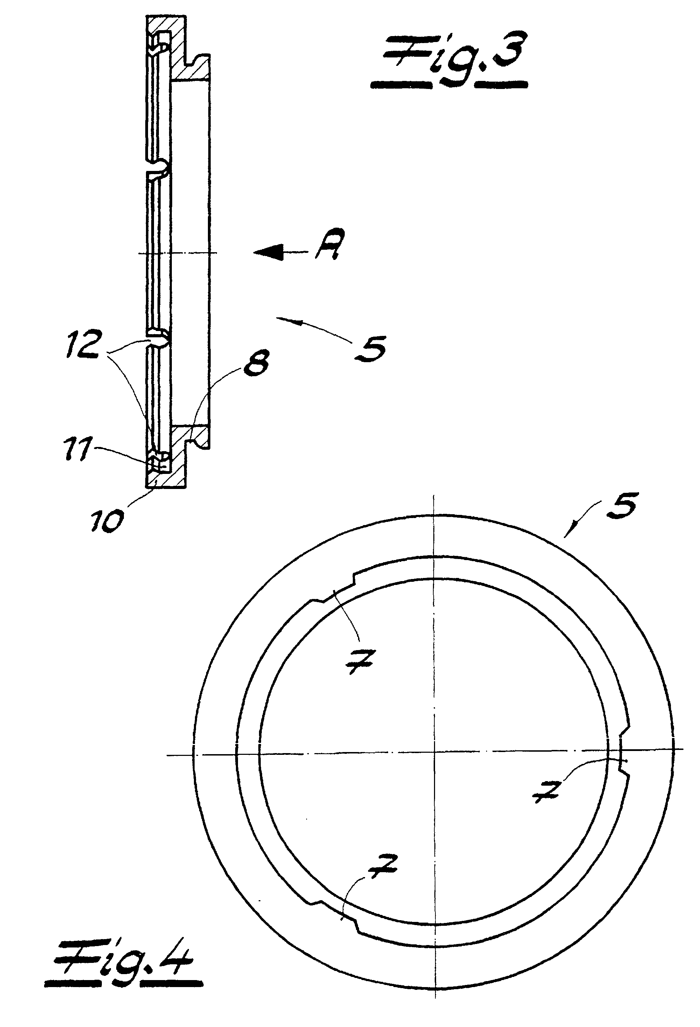

Die in den Fig. 1 und 2 dargestellte Pressverbindung wird vor allem für Verbundrohre eingesetzt, die eine innere Kunststoffschicht, eine äußere Kunststoffschicht und eine Einlage aus Metall aufweisen. Die Pressverbindung besteht aus einem Verbindungsstück 1, das mindestens einen mit ringförmigen Nuten versehenen Anschlusszapfen 2 für ein Rohr 3 aufweist, und mindestens einer konzentrisch zum Anschlusszapfen 2 angeordneten, metallischen Presshülse 4, die formschlüssig mit einem Kunststoffring 5 verbunden ist. Das Rohrende wird in den ringförmigen Aufnahmeraum zwischen Anschlusszapfen 2 und Presshülse 4 eingesetzt. Mit einem Presswerkzeug, das am Umfang der Presshülse 4 angesetzt wird, werden das Verbundrohr 3 und die Presshülse 4 verformt. Dabei füllt das Kunststoffmaterial des Rohres die ringförmigen Nuten des Anschlusszapfens 2 aus, wobei eine kraft- und formschlüssige Verbindung entsteht. Die Verbindung ist drehfest und dicht. In den Figuren ist die Pressverbindung vor der Verpressung dargestellt.

Einer vergleichenden Betrachtung der Fig. 1 bis 6 entnimmt man, dass die Presshülse 4 an ihrem anschlussseitigen Ende radial nach innen vorspringende Nasen 6 aufweist, die axial in Aussparungen 7 des Kunststoffringes 5 einsetzbar sind und nach einer Drehung der Presshülse 4 in eine ringförmige Nut 8 des Kunststoffringes 5 eingreifen. Dadurch entsteht eine Formschlussverbindung nach Art einer Bajonettverbindung. Der Kunststoffring 5 ist mit dem Verbindungsstück 1, auch Fitting genannt, verbunden. Die an dem Kunststoffring 5 vormontierte Presshülse 4 umgibt den Anschlusszapfen 2 konzentrisch und bildet einen Ringraum für den Einschub eines Rohres 3. Der linke Teil der Fig. 2 zeigt die werkseitig vormontierte Anordnung. In der rechten Hälfte der Fig. 2 ist das anzuschließende Rohr 3 bereits eingeschoben.

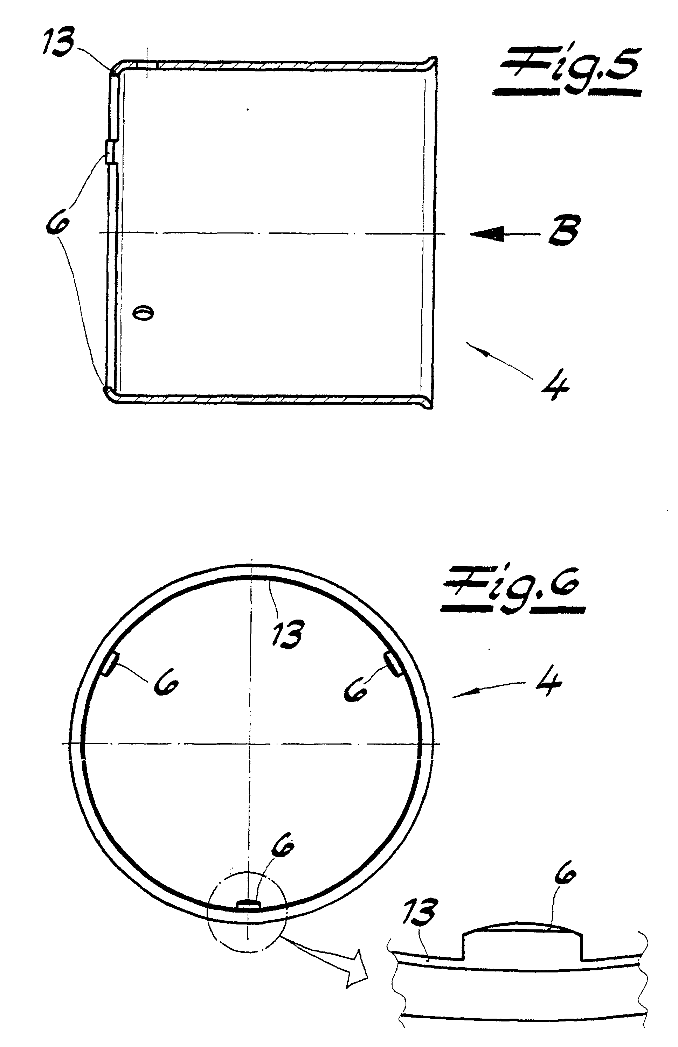

Bei der in den Fig. 1 und 2 dargestellten Ausführung der Erfindung ist das Verbindungsstück 1 als Metallteil ausgebildet. Es weist zwei Kragen 9 auf, an die jeweils ein Kunststoffring 5 fest angeschlossen ist. Die Verbindung zwischen Kunststoffring 5 und Kragen 9 ist im Ausführungsbeispiel ebenfalls als Bajonettverbindung ausgebildet, kann aber beispielsweise auch als Schnappverbindung gestaltet werden, bei der der Kunststoffring aufgedrückt wird und federelastische Formschlusselemente des Kunststoffringes hinter Gegenelementen des Verbindungsstückes einschnappen. Insbesondere den vergrößerten Darstellungen in den Fig. 3 und 4 entnimmt man, dass der Kunststoffring 5 eine Muffe 10 aufweist, die eine ringförmige Innennut 11 und mehrere am Umfang in äquidistanten Abständen angeordnete Einschubschlitze 12 enthält. Die Muffe 10 ist axial auf den Kragen 9 des metallischen Verbindungsstückes 1 aufschiebbar. Durch eine Drehbewegung kann dann die Innennut 11 mit radialen Vorsprüngen des Kragens 9 in Eingriff gebracht werden. Die Anordnung wird werkseitig vormontiert.

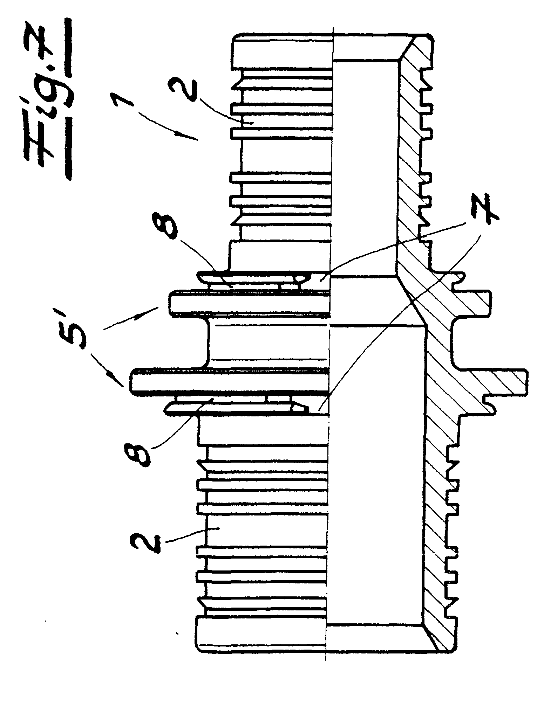

Die Presshülse 4 ist als Tiefziehteil ausgebildet und weist einen nach innen eingestülpten und mit radialen Vorsprüngen versehene Rand 13 auf (Fig. 5 und 6). Die Vorsprünge bilden die Nasen 6 für die Formschlussverbindung mit dem Kunststoffring 5.

Das Verbindungsstück 1 kann auch aus Kunststoff bestehen. Geeignet sind schlagzähe, technische Kunststoffe, z. B. PPSU. Eine solche Ausführung ist in Fig. 7 dargestellt. Das Verbindungsstück 1 ist als Kunststoffspritzgussteil ausgebildet, an das mindestens ein ringförmiger Bund 5', dessen Gestaltung und Zweckbestimmung dem zuvor beschriebenen Kunststoffring 5 entspricht, einstückig angeformt ist. Die radial vorspringenden Nasen 6 der Presshülse 4 sind axial in Aussparungen 7 des ringförmigen Bundes 5' einsetzbar und greifen nach einer Drehung der Presshülse 4 hinter den Bund 'in eine ringförmige Nut des Verbindungsstückes ein.

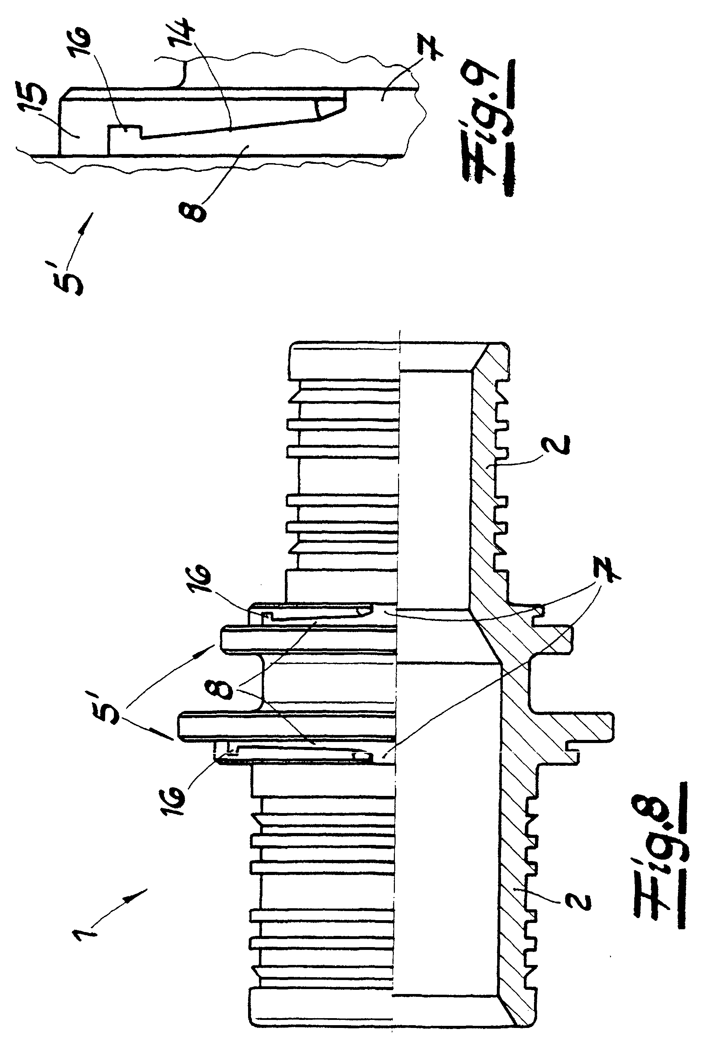

Im Hinblick auf eine feste Halterung der vorkragenden Presshülse 4 müssen die Nasen 6 spielfrei in der Nut 8 gehalten sein. Bei der in den Figuren 8 und 9 dargestellten Ausführung weist die ringförmige Nut 8 in Drehrichtung der Presshülse 4 konisch zulaufende Spannflächen 14 auf, welche die Nasen 6 der Presshülse 4 mit einem Klemmsitz fixieren. Ferner ist die Ringnut 8 durch Stege 15 in Segmente unterteilt, wobei die Stege 15 Anschläge für die in die Ringnut 8 eingreifenden Nasen 6 bilden. Zweckmäßig ist die Anordnung ferner so getroffen, dass eine Verrastung erfolgt. Dies ist dadurch erreichbar, dass die Spannflächen 14 Aufnahmetaschen 16 enthalten, in welche die Nasen 6 einrasten. Ferner kann der Klemmsitz auch dadurch erreicht werden, dass in der Ringnut 8 Erhebungen mit unterschiedlich ausgebildeten Radien angeordnet sind, über die Nasen 6 der Presshülse einrasten.

## Patentansprüche

1. Pressverbindung für Rohre, bestehend aus einem Verbindungsstück (1), das mindestens einen mit ringförmigen Nuten versehenen Anschlusszapfen (2) für ein Rohr (3) aufweist, und einer konzentrisch zum Anschlusszapfen (2) angeordneten, metallischen Presshülse (4), **dadurch gekennzeichnet, dass** die Presshülse (4) an ihrem anschlussseitigen Ende mindestens drei radial nach innen vorspringende Nasen (6) aufweist, die axial in Aussparungen (7) eines an das Verbindungsstück (1) angeformten ringförmigen Bundes (5') oder eines fest an das Verbindungsstück (1) angeschlossenen Kunststoffringes (5) einsetzbar sind und nach einer Drehung der Presshülse (4) in eine ringförmige Nut (8) eingreifen, wobei die vormontierte Presshülse (4) den Anschlusszapfen (2) konzentrisch umgibt und einen Ringraum für den Einschub eines Rohres (3) bildet.

2. Pressverbindung nach Anspruch 1, **dadurch gekennzeichnet, dass** die ringförmige Nut (8) in Drehrichtung der Presshülse (4) konisch zulaufende Spannflächen (14) aufweist, welche die Nasen (6) der Presshülse (4) mit einem Klemmsitz fixieren.

3. Pressverbindung nach Anspruch 2, **dadurch gekennzeichnet, dass** die Spannflächen (14) Aufnahmetaschen (16) enthalten, in welche die Nasen (6) einrasten.

4. Pressverbindung nach Anspruch 1, **dadurch gekennzeichnet, dass** die ringförmige Nut (8) in Drehrichtung der Presshülse (4) Erhebungen mit unterschiedlich ausgebildeten Radien aufweist, über die die Nasen (6) der Presshülse (4) einrasten.

5. Pressverbindung nach einem der Ansprüche 1 bis 4, **dadurch gekennzeichnet, dass** die Ringnut (8) durch Stege (15) in Segmente unterteilt ist, wobei die Stege (15) Anschläge für die in die Ringnut (8) eingreifenden Nasen (6) bilden.

6. Pressverbindung nach einem der Ansprüche 1 bis 5, **dadurch gekennzeichnet, dass** das Verbindungsstück (1) als Kunststoffspritzgussteil ausgebildet ist.

7. Pressverbindung nach einem der Ansprüche 1 bis 5, **dadurch gekennzeichnet, dass** das Verbindungsstück (1) als Metallteil ausgebildet ist und einen Kragen (9) aufweist, an den der Kunststoffring (5) fest angeschlossen ist.

8. Pressverbindung nach Anspruch 7, **dadurch gekennzeichnet, dass** der Kunststoffring (5) durch eine Bajonettverbindung oder eine Schnappverbindung mit dem Kragen (9) des Verbindungsstückes (1) verbunden ist.

9. Pressverbindung nach Anspruch 7 oder 8, **dadurch gekennzeichnet, dass** der Kunststoffring (5) eine Muffe (10) aufweist, die eine ringförmige Innennut (11) und mehrere am Umfang in äquidistanten Abständen angeordnete Einschubschlitze (12) enthält, wobei die Muffe (10) axial auf den Kragen (9) des metallischen Verbindungsstückes (1) aufschiebbar ist, und wobei durch eine Drehbewegung die Innennut (11) mit radialen Vorsprüngen des Kragens (9) in Eingriff bringbar ist.

10. Pressverbindung nach einem der Ansprüche 1 bis 9, **dadurch gekennzeichnet, dass** die Presshülse (4) als Tiefziehteil einen nach innen eingestülpten und mit radialen Vorsprüngen versehenen Rand (13) aufweist, wobei die Vorsprünge Nasen (6) für die Formschlussverbindung mit dem Kunststoffring (5) bzw. dem ringförmigen Bund (5') bilden.

## Claims

1. A press connection for pipes, consisting of a connecting piece (1) which has at least one connecting pin (2) provided with ring-shaped grooves for a pipe (3), and a metallic press sleeve (4) arranged concentrically with respect to the connecting pin (2), **characterised in that** the press sleeve (4) has at least three lugs (6) projecting radially inwards at its connection end which can be inserted axially in recesses (7) of a ring-shaped collar (5') moulded onto the connecting piece (1) or of a plastic ring (5) connected securely to the connecting piece (1), and after a turn of the press sleeve (4) engage in a ring-shaped groove (8), wherein the pre-assembled press sleeve (4) concentrically surrounds the connecting pin (2) and forms an annular space for inserting a pipe (3).

2. The press connection according to Claim 1, **characterised in that** the ring-shaped groove (8) has conically inwardly directed gripping surfaces (14) which fix the lugs (6) of the press sleeve (4) with a force fit.

3. The press connection according to Claim 2, **characterised in that** the gripping surfaces (14) contain take-up pockets (16) in which the lugs (6) engage.

4. The press connection according to Claim 1, **characterised in that** in the direction of turning of the press sleeve (4) the ring-shaped groove (8) has elevations with differently formed radii over which the lugs (6) of the press sleeve (4) engage.

5. The press connection according to one of Claims 1 to 4, **characterised in that** the annular groove (8) is divided into segments by cross-pieces (15) wherein the cross-pieces (15) form stops for the lugs (6) engaging in the annular groove (8).

6. The press connection according to one of Claims 1 to 5, **characterised in that** the connecting piece (1) is constructed as a plastic injection moulding.

7. The press connection according to one of Claims 1 to 5, **characterised in that** the connecting piece (1) is constructed as a metal component and has a collar (9) to which the plastic ring (5) is securely connected.

8. The press connection according to Claim 7, **characterised in that** the plastic ring (5) is connected to the collar (9) of the connecting piece (1) by means of a bayonet connection or a snap connection.

9. The press connection according to Claim 7 or 8, **characterised in that** the plastic ring (5) has a sleeve (10) which contains a ring-shaped inner groove (11) and several insertion slots (12) arranged at equidistant intervals around the circumference, wherein the sleeve (10) can be pushed axially onto the collar (9) of the metal connecting piece (1) and wherein the inner groove (11) can be made to engage with radial projections of the collar (9) by a turning movement.

10. The press connection according to one of Claims 1 to 9, **characterised in that** the press sleeve (4) as a deep-drawn component has an inwardly inverted edge (13) provided with radial projections, wherein the projections form lugs (6) for positive connection with the plastic ring (5) or the ring-shaped collar (5').

## Revendications

1. Joint serti pour tubes, constitué d'une pièce de liaison (1) qui comporte au moins un raccord mâle (2), pourvu de rainures annulaires, pour un tube (3), et d'une douille de sertissage (4) métallique disposée concentriquement au raccord mâle (2), **caractérisé en ce que** la douille de sertissage (4) comporte, à son extrémité côté raccordement, au moins trois ergots (6) qui font saillie vers l'intérieur et qui peuvent être insérés axialement dans des découpes (7) d'un épaulement (5') annulaire formé sur la pièce de liaison (1) ou d'une bague (5) en matière plastique solidaire de la pièce de liaison (1) et qui, après une rotation de la douille de sertissage (4), s'engagent dans une rainure annulaire (8), la douille de sertissage (4) prémontée entourant le raccord mâle (2) concentriquement et formant un espace annulaire pour l'introduction d'un tube (3).

2. Joint serti selon la revendication 1, **caractérisé en ce que** la rainure annulaire (8) présente des surfaces de serrage (14) qui se terminent coniquement dans le sens de rotation de la douille de sertissage (4) et qui fixent les ergots (6) de la douille de sertissage (4) avec un ajustement serré.

3. Joint serti selon la revendication 2, **caractérisé en ce que** les surfaces de serrage (14) contiennent des poches de réception (16) dans lesquelles s'accrochent les ergots (6).

4. Joint serti selon la revendication 1, **caractérisé en ce que** la rainure annulaire (8) présente, dans le sens de rotation de la douille de sertissage (4), des reliefs aux rayons conformés différemment par lesquels s'accrochent les ergots (6) de la douille de sertissage (4).

5. Joint serti selon l'une des revendications 1 à 4, **caractérisé en ce que** la rainure annulaire (8) est divisée en segments par des cloisons (15), les cloisons (15) formant des butées pour les ergots (6) s'engageant dans la rainure annulaire (8).

6. Joint serti selon l'une des revendications 1 à 5, **caractérisé en ce que** la pièce de liaison (1) est réalisée en tant que pièce en matière plastique moulée par injection.

7. Joint serti selon l'une des revendications 1 à 5, **caractérisé en ce que** la pièce de liaison (1) est réalisée en tant que pièce métallique et présente une collerette (9) à laquelle la bague (5) en matière plastique est raccordée fixement.

8. Joint serti selon la revendication 7, **caractérisé en ce que** la bague (5) en matière plastique est reliée à la collerette (9) de la pièce de liaison (1), par un raccord à baïonnette ou une liaison à encliquetage.

9. Joint serti selon la revendication 7 ou 8, **caractérisé en ce que** la bague (5) en matière plastique comporte un manchon (10) qui contient une rainure intérieure (11) annulaire et plusieurs fentes d'introduction (12) disposées à distances équidistantes sur le pourtour, le manchon (10) pouvant être enfilé axialement sur la collerette (9) de la pièce de liaison (1) métallique, et la rainure intérieure (11) pouvant être amenée en prise avec des saillies radiales de la collerette (9), par un mouvement de rotation.

10. Joint serti selon l'une des revendications 1 à 9, **caractérisé en ce que** la douille de sertissage (4) présente, en tant que pièce emboutie, un bord (13) retourné vers l'intérieur et pourvu de saillies radiales, les saillies formant des ergots (6) pour la liaison par complémentarité de forme avec la bague (5) en matière plastique ou l'épaulement annulaire (5').
